Europäisches Patentamt

European Patent Office

Office européen des brevets

(19)

(11) Publication number: **0 126 529**
**B1**

(12) **EUROPEAN PATENT SPECIFICATION**

(45) Date of publication of patent specification: 21.09.88

(51) Int. Cl.⁴: **A 21 D 2/02**

(21) Application number: **84302088.4**

(22) Date of filing: **28.03.84**

(54) Process for making low sodium crackers and cookies and products obtained thereby.

(30) Priority: 30.03.83 US 480431
29.02.84 US 584868

(43) Date of publication of application:
28.11.84 Bulletin 84/48

(45) Publication of the grant of the patent:
21.09.88 Bulletin 88/38

(84) Designated Contracting States:
AT BE CH DE FR GB IT LI LU NL SE

(56) References cited:
US-A-1 706 760
US-A-1 952 947
AGRICULTURAL AND BIOLOGICAL
CHEMISTRY, vol. 42, no. 2, 1978, pages 365-
369, Tokyo, JP; M. TERADA et al.: "Some
rheological properties of dough alkalified and
neutralized"
FOOD SCIENCE TECHNOLOGY ABSTRACTS,
1980, no. 719584; V.A. PATT et al.: "Process for
preparing wheat samples for breadmaking", &
SU - A - 719 584
BROT UND GEBÄCK, 18. JAHRGANG 1964,
Heft 3, pp. 41-48, "ÜBER DIE HERSTELLUNG
HOLLÄNDISCHER FRÜHSTÜCKSKUCHEN", E.
BRAAKSMA et al.

(73) Proprietor: NABISCO BRANDS, Inc.
Nabisco Brands Plaza
Parsippany New Jersey 07054 (US)

(72) Inventor: Arciszewski, Henry
896 Colonial Road
Franklin Lakes New Jersey (US)
Inventor: Porzio, Linda Adele
61 Gionti Place
North Haledon New Jersey 07508 (US)
Inventor: Chiang, Bin Yea
57-46 Hewlett Street
Littleneck New York 11362 (US)
Inventor: Spotts, Clyde Emerson, Jr.
39 Pershing Avenue
Ridgewood New Jersey 07054 (US)

(74) Representative: Quest, Barry et al
M'CAW & Co.
41-51 Royal Exchange Cross Street
Manchester M2 7BD (GB)

Courier Press, Leamington Spa, England.

## Description

This invention relates to the production of sponge goods, particularly sponge goods having a low sodium content. This invention also relates to low sodium cookies and low sodium crackers, such as soda crackers.

In the production of sponge goods, such as soda crackers, sodium bicarbonate serves a dual function of: 1) neutralizing the acids produced by fermentation in production of the sponge and, 2) leavening the sponge-good dough prior to and during baking. The yeast-leavened sponge contains a considerable amount of acid which is developed by the yeast and by bacteria during fermentation. Sponge formation is followed by production of the sponge-good dough. The acid in the sponge is neutralized by adding sodium bicarbonate when the dough stage is mixed.

The production of soda crackers by this method is disclosed in US-A-1 803 588 and 2 288 118 and in Johnson et al, Encyclopedia of Food Technology, The AVI Publishing Company, Inc., Westport, Connecticut, Vol. 2, pages 113-114 (1974), and by Matz, Samuel in Cereal Technology, The AVI Publishing Company, Inc., Westport, Connecticut, pages 80-82 (1970), and in Matz, Cookie and Cracker Technology. The AVI publishing Company, Inc., Westport, Connecticut, pages 137-142 (1968). A soda cracker produced by this method typically contains about 194 mg total sodium per 14.2 gm serving. About 20 to 25% of this total sodium is due to the use of sodium bicarbonate. Medically, it is considered essential that persons suffering from vascular diseases, coronary diseases, and liver diseases, be restricted to a low sodium diet.

Many compositions have been developed as a replacement for common table salt, or sodium chloride, for use in low sodium diets. Salt substitute compositions are disclosed in US-RE-27 981, and US-A-2 601 112, 2 824 008 and 3 505 082. In the compositions of these patents, potassium chloride is used as a replacement for sodium chloride. Other ingredients are added to mask the bitter taste of the potassium ion and to minimize caking and dusting. The beneficial effect of including potassium in the diet is taught in US-A-4 216 237 and in SU-A-257 399. In US-A-4 216 237 the bitter taste of the potassium ion is masked with a water-soluble, carbohydrate foodstuff ingredient. Potassium chloride, it is disclosed, is prone to ulcerate the intestinal tract, in addition to being unpalatable. Substantially equal portions of bicarbonate, citrate, and diphosphate are used to achieve a better balance of anions more closely related to natural potassium sources. Approximately 1/4 to 1/2 of the potassium salt ingredient is comprised by the chloride. In SU-A-257 399, potassium chloride is used in a two-to-one ratio with lithium chloride to improve the curing properties of dietetic bread or rolls. The taste of the products, it is disclosed, is the same as with sodium chloride and the harmful effects of sodium chloride are avoided. While replacement of sodium chloride with potassium chloride can be beneficial to the health, as indicated in these patents, it would not serve the function of neutralizing the acids produced in forming a sponge, and it would not leaven the sponge-good dough. Additionally, sodium chloride contributes flavor to a cracker or sweet good. In producing a low sodium baked good, it would be desirable to eliminate other sources of sodium to enable retention of some sodium chloride for its flavoring characteristics.

While sodium bicarbonate is the most widely used chemical leavening agent, many other compositions for producing carbon dioxide gas in foods without the use of sodium bicarbonate are known. Baking powder compositions which contain ammonium carbonate or ammonium bicarbonate are disclosed in US-A-150 844, 174 890, 235 615, and 1 865 938. The carbonate of barium is considered to be poisonous in US-A-331 541 and 331 542. The carbonates of calcium, magnesium and strontium are used in the baking powder compositions of the latter two patents. The carbonates of calcium are also utilized in the baking powders of US-A-150 844 and 328 364. The carbonates of magnesium are present in the baking powders of US-A-315 830, 315 831, 315 832 and 328 364. The carbonate or bicarbonate of potassium is present in the baking powder compositions of US-RE-2597, US-RE-2979, and US-A-14 722, 96 994, 150 844, 174 890, 235 615 and 673 057. According to US-A-235 615, the bicarbonate is preferred over the carbonate for raising bread because less lactate is required to react with the bicarbonate. In US-A-422 464, it is taught that ammonium carbonate is used to prevent a baking soda comprising cream of tartar and sodium bicarbonate from becoming hard. However, according to US-A-422 464, the carbonate of ammonium is considered to be objectionable as a food.

Effervescing salt compositions which utilize carbonates for producing carbon dioxide are disclosed in US-A-1 450 865 and 2 984 543. The carbonates or bicarbonates of sodium, potassium, ammonium, calcium or magnesium may be used in the compositions of US-A-1 450 865. In US-A-2 984 543 the effervescing salt may contain potassium or lithium bicarbonates or calcium, magnesium, or organic carbonates. However, in these effervescing salt compositions and in the baking powder compositions, an acid is included for reaction with the bicarbonate or carbonate for producing the carbon dioxide. These compositions would be unsuitable for use in producing a sponge-good dough because they would not serve the dual function of leavening the sponge-good dough and neutralizing the acids which are produced during formation of the sponge.

The addition of an alkaline carbonate as a neutralizer and as a leavening agent for a "prepared flour" is taught in US-A-1 428 628. Lactic acid which is present in sour milk or butter milk of the prepared flour is neutralized by the alkaline carbonate. Bicarbonate of soda, however, is the only carbonate disclosed in the patent.

The use of carbonates, other than sodium bicarbonate in the production of baked goods is disclosed in

**0 126 529**

GB-A-1085 of 1883 and 335 214, US-A-2 970 915 and as early as 1796 in American Cookery, by Amelia Simmons, reprint by Martin Rywell, Buck Hill Associates, Johnsburg, NY 12843, pps. 30-31 (1966). The addition of iron and manganese carbonates to bread and biscuits for medicinal purposes is disclosed GB-A-1085 of 1883. Magnesium and/or calcium carbonates are taught as acid-neutralizing constituents in GB-A-335 214 for dough or flour compositions which contain persulphates and bromates. Calcium carbonate is disclosed as a bread improver in US-A-2 970 915. In American Cookery, recipes for honey cake and cookies include pearl ash, an impure potassium carbonate product obtained by partial purification of potash from wood ashes. Replacement of sodium bicarbonate with potassium carbonate to achieve sodium reduction in the final baked product is not, taught by any of these references.

The preparation of a health bread with potassium carbonate and ammonium carbonates a leavening agent is taught in US-A-2 228 729. The potassium carbonate, it is disclosed, results in a bread which is free of greenish color or hue and possesses a fine whitish interior. The ammonium and potassium carbonates are added to a sponge which contains approximately 40% or more eggs. The large percentage of eggs, it is disclosed, creates a large expanding force upon heating thereby reducing the usual amount of chemical leavening agents needed for expansion. Although a sponge is produced, fermentation is not disclosed in the patent. Additionally, the degree of expansion needed in the production of the bread would be unacceptable in the production of crackers.

The use of alkaline carbonates, other than those of sodium, as a leavening agent or neutralizing agent in the production of baked goods, is also disclosed in US-A-317 821, 1 913 044, 2 070 922 and 2 394 791, and in Food Materials & Equipment, page 18, (March 1946). Treating a sponge to neutralize its acidity, to leaven it and to obtain a low-sodium cracker is not disclosed in these references. In US-A-317 821, the acid or disulfate of potash with carbonates or bicarbonates of potash is used as a replacement for tartaric acid in the production of bread, cakes, biscuits, and the like. In US-A-1 913 044, a bicarbonate or carbonate of either sodium or potassium is reacted with manganese succinate to promote oxidation of the coloring matter in a bread dough. Calcium carbonate is taught as a replacement for sodium bicarbonate in the pastry industry in the Food Materials & Euipment article. In US-A-2 070 922, hydrogen peroxide is used as a leavening agent in the production of waffles, griddle cakes, crackers, and the like. Alkaline metal carbonates are used to stabilize the hydrogen peroxide and to make the formulation alkaline at a pH of about 8 to 10. Pre-neutralization of starch for various wafer or waffle batters with calcium carbonate is taught in US-A-2,394,791. The calcium carbonate replaces a portion of the sodium bicarbonate, the sodium bicarbonate being retained to obtain sufficient leavening action.

Treatment of a fermented dough with a carbonate other than sodium is disclosed in US-A-2 032 442. In the process of this patent, a heat-decomposable ammonium compound, such as a carbonate of ammonium, is applied to the surface of a fermented dough. Subsequent baking releases ammonia which browns the surface of the bread, rolls, and like products. Mixing of the ammonium carbonate with the fermented dough to distribute it substantially uniformly throughout the dough to achieve neutralization of acids produced during fermentation is not disclosed.

The use of alkaline carbonates, other than sodium bicarbonate, in fermented doughs for the production of various baked goods, is disclosed in US-A-2 033 099, 2 137 027, 3 108 878 and 4 044 155. In the processes of these patents the alkaline carbonate is added with the yeast and is present during fermentation. Breads, rolls, buns, and the like are produced from these yeast leavened doughs, The production of soda crackers is not disclosed, In US-A-2 033 009, an alkaline salt is added to the yeast food to keep it alkaline until it reaches the fermentation stage, whether in the dough or in the sponge. Calcium carbonate or magnesium carbonate are disclosed as the preferred alkaline salts because of their slow solubility. In US-A-2 137 027, a yeast sponge is buffered with ammonium carbonate or calcium or magnesium carbonates. In US-A-3 108 878, a calcium carbonate buffer is added with yeast to a soy flour dough composition. In US-A-4 044 155, a non-fat dry milk substitute for incorporation into yeast-leavened doughs, is prepared by mixing deproteinized whey, an ammonium compound such as ammonium carbonate or bicarbonate, and a protein supplement. A basic material, such as a carbonate or bicarbonate of sodium, potassium, calcium, or magnesium, is optionally added to control the pH of the substitute and to at least partially neutralize the deproteinized whey.

Calcium carbonate is taught as a buffering agent for a liquid yeast brew in US-A-3 490 916. The brew may be used to form a yeast leavened dough, which may be a cracker or soda cracker composition. The use of calcium carbonate to neutralize the acids present in a sponge and to leaven the fermented dough is not disclosed. Furthermore, calcium carbonate is not sufficiently soluble in water to uniformly neutralize the acids in a sponge or to leaven a sponge dough substantially uniformly.

US-A-1 633 872 discloses ammonium bicarbonate as a substitute for baking soda in the production of an unsalted cracker. According to this patent, salt is added to the surface of a cracker to mask the objectionable taste resulting from the breakdown of the fat used as shortening. The rancidity is eliminated by the use of coconut oil, thereby eliminating the need for a salt topping. The use of ammonium bicarbonate instead of sodium bicarbonate as the means of raising the dough, it is disclosed, eliminates the soda flavor and improves the color of the cracker. A relatively rapid fermentation time of four to five hours is used before the ammonium bicarbonate is added to the sponge dough. Adding sufficient ammonium bicarbonate to neutralize acids produced during the fermentation is not disclosed. According to this patent,

3

if too large a proportion of ammonium bicarbonate is used, a yellow objectionable color develops in the cracker.

In using ammonium bicarbonate alone as a replacement for sodium bicarbonate, neutralization of acids produced during fermentation becomes a problem. As disclosed in US-A-1 633 872, the ammonium bicarbonate is entirely volatilized in the baking operation. The release of both ammonia and carbon dioxide makes pH control of the final product difficult. Furthermore, it has been found that replacement of sodium bicarbonate with ammonium bicarbonate in the production of a soda cracker, does not result in a uniform laminar cell structure. Large cells and tight areas are obtained with ammonium bicarbonate. The cracker is too tender and has both flat and raised or bubbled portions. Accordingly, ammonium bicarbonate alone is not a suitable replacement for sodium bicarbonate in the production of an acceptable low sodium soda cracker.

Potassium bicarbonate has been used as a component in leavening mixtures for baked products intended to be consumed in sodium-free diets. However, as disclosed by Matz in Cookie and Cracker Technology (1968) at page 77, potassium bicarbonate is very hygroscopic and tends to impart a bitter flavor to the foods in which it is used. Crackers are baked to a low moisture content and their crispness gives a snap or crunch upon eating. The presence of a highly hygroscopic material in a cracker would tend to be deleterious to the achievement of these sensory properties. Additionally, potassium bicarbonate is very expensive. Matz teaches away from the use of carbonates because their very high alkalinity, compared to the alkalinity of sodium bicarbonate, tends to result in localized areas of very high alkalinity which is formed as the granules dissolve in the dough. These localized areas, it is disclosed, result in reactions which lead to undesirably colored and flavored products. In producing a laminated product, these localized areas generally appear as dark streaks in the baked product.

Food Science Technology Abstracts, 1980, No. 719 584, V.A. Patt et al., "Process for preparing wheat samples for breadmaking", describes a process for making bread containing flour, water and an alkali metal carbonate, which can be potassium carbonate. Brot und Gebaeck, 18th Year 1964, Book 3, pages 41-48, describes a process in which potassium carbonate is used in the production of a "Dutch breakfast cake". Neither of these documents describes the use of potassium carbonate as a leavening agent to produce sponge goods having a pH within the range produced by the method of this invention.

The present invention provides a method for the production of sponge goods, especially crackers, having a crisp texture, a non-bitter taste, a pleasant mouth feel and a substantially uniform laminar cell structure without using sodium bicarbonate. Thus, substantial sodium reduction can be achieved while retaining sodium chloride for its flavoring characteristics. The baked sponge goods have a uniform brown color on their surfaces, are of substantially uniform pH throughout, and are devoid of hot-spots or dark streaks caused by localized areas of carbonate leavening agents.

Under current United States of America Food and Drug Administration proposals, a "low sodium" baked good, which includes sponge goods, unfermented type crackers, cookies and cakes, has a sodium content of less than or equal to 35 mg, Na$^+$ per serving. Also, a "no-sodium" baked good has a sodium content of less than or equal to 5 mg. Na$^+$ per serving. According to FDA proposed rules, products which contain no greater than 20% in excess of the value stated for sodium declared in the label are considered to be properly labeled. "Low-sodium" products and "no-sodium" products may accordingly contain up to 42 mg. per serving and up to 6 mg. per serving, respectively. The weight of a "serving" depends upon the type of baked good. As used herein, a serving is 14.2 g. (1/2 oz.) for crackers of the fermented type, 28.35 g. (1 oz.) for cookies and pretzels, and 55.4 g. for cakes. The present invention provides a process for reducing the sodium content of baked sponge goods to a "low sodium" or "no sodium" level as defined above for each type of baked good. The sodium content is based upon the final baked product (i.e., the serving) and includes sodium from topping salt (sodium chloride) as well as from salt within the final product.

Accordingly, this invention provides a method for making a sponge good comprising:

a. preparing a sponge by a process comprising mixing sponge ingredients comprising flour, water, and yeast and fermenting the mixture,

b. forming a dough by a process comprising admixing the sponge with dough ingredients comprising flour and an alkaline leavening agent so as to form a sponge-good dough, the alkaline leavening agent added serving to control the pH of the dough by neutralizing acids produced during the fermentation and to leaven the, dough, and

c. baking the dough.

The process of the invention is characterized in that the alkaline leavening agent used is potassium carbonate, and in that the addition of the potassium carbonate is effected so as to avoid localized concentrations of potassium carbonate by:

(i) distributing the potassium carbonate substantially uniformly and directly over the surface of the sponge such that substantially all of the potassium carbonate becomes hydrated and solubilized;

(ii) distributing the flour substantially uniformly and directly over the surface of the sponge and distributing the potassium carbonate substantially uniformly and directly over the surface of the flour; or

(iii) adding the potassium carbonate in the form of an aqueous solution, and the amount of potassium carbonate added is sufficient to obtain a pH of 7.0 to 8.0 in the baked sponge good.

The present invention allows the production of baked sponge goods, such as soda crackers, without using sodium bicarbonate. By eliminating a substantial portion or all of the sodium bicarbonate, a larger amount of sodium chloride can be retained for the flavor, or the "bite" which is characteristic of salt while achieving a lower sodium content. Reduction of the sodium chloride level and the sodium bicarbonate level can achieve a sodium content of, for example: a) less than or equal to 42 mg,, preferably less than or equal to 35 mg., per 14.2 gm serving for "low sodium products", or b) less than or equal to 6 mg., preferably less than or equal to 5 mg., per 14.2 gm serving for "no-sodium" products. A substantially uniform pH throughout the final product and the substantial elimination of hot-spots or dark streaks caused by localized areas of potassium carbonate is achieved by the techniques used to add potassium carbonate. The sponge goods produced by the method of the present invention goods have a crisp texture, a non-bitter taste, uniform brown color on their surfaces, and a substantially uniform laminar cell structure which are characteristic of similar crackers conventionally produced using sodium bicarbonate. The products have a pleasant mouth feel even though they are slightly drier tasting than their high-sodium counterparts.

Conventional formulations can be used for the production of sponge goods by the process of the present invention except that the sodium bicarbonate is replaced with potassium carbonate. Replacing all of the sodium bicarbonate with potassium carbonate allows for substantially all of the sodium content to be from sodium chloride. The sodium chloride contributes to flavor enhancement and the elimination of a bland taste to a much greater extent than does sodium bicarbonate. It has been found that, due to the higher alkalinity of potassium carbonate, the amount of potassium carbonate which is needed to achieve a desired pH is approximately 80% to 90% by weight of the amount of sodium bicarbonate used in a conventional formulation.

The basic ingredients in the preparation of a sponge are flour and water. The fermentation agents are yeast and bacteria. The yeast, flour, and the surfaces of the trough in which the sponge is formed serve as sources of the bacteria. It is preferable to use a starter or inoculum from a previous batch of sponge to serve as a source of yeast and bacteria. A sponge flour is typically relatively strong, unbleached, with an ash of 0.39 to 0.42%. It typically has a protein content of about 7.5 to 13.0% and an acid viscosity value in the range of about 60° to 90°M. A typical sponge is produced by combining the flour, water, yeast, and optional inoculum in a mixer, such as a spindle mixer. During fermentation, starch is converted to dextrins and fermentable sugars by amylases. Deficiencies in flour amylase can be corrected by the addition of diastatically active malt flour, such as malted barley, flour, and/or a fungal diastase, and/or proteolytic enzyme.

Shortening, which can be lard or vegetable shortening, for example, is preferably added to the sponge during the dough-mixing stage. However, a portion of the shortening may be used to produce the sponge. It is also preferable to add all of the water in the sponge-forming stage to avoid an extra step in the dough-forming stage. A portion may be added to the sponge in the dough-forming stage in a manner which avoids disturbing the substantially uniform distribution of the potassium carbonate.

In the production of the sponge, a buffering system may be used to compensate for water supplies which have very high pH's. Commercially available buffering systems for this purpose or commercially available yeast foods which contain buffering systems can be used.

Typical relative amounts of the ingredients used in the formation of the sponge are from about 60 to about 70% by weight wheat flour, from about 27% by weight to about 33% by weight water, from about 0.1 to about 1% by weight yeast, from 0 to 1% by weight diastatic malt or proteolytic enzyme, from about 0 to about 7% shortening, from about 0 to about 1% by weight yeast food, and from about 0 to about 2% by weight of, starter or ferment, All percentages are based upon the total weight of the ingredients used to form the sponge. Known buffers can be added as needed to obtain a pH of about 5 to about 6.5 at the start of the fermentation. Various flours can be used, such as wheat, rice, graham and mixtures thereof, but wheat flour is preferred.

Fermentation times (also referred to herein as sponge times) are those conventionally used in the art. In the case of soda crackers or saltines, and the many variants of these products such as oyster (soup) crackers, club crackers, cheese crackers, and the like, sponge times of about 2 to 24 hours, are typically used. The process of the present invention can also be used in the production of sponge goods requiring shorter fermentation times or longer fermentation times by replacing the sodium bicarbonate which is added in the dough-up step with potassium carbonate.

In preparing the sponge, no special order of mixing is required. Conventional processes can be used. Typically, the flour is dumped into a trough, a portion of the water containing dissolved yeast buffer is added, the remaining ingredients of the sponge are added, and then the balance of water is added. The sponge ingredients are mixed until clear to obtain substantial homogeneity. The setting temperature for the sponge is usually about 24°C but varies from about 21° to about 27°C depending upon several factors, chiefly the flour.

Typical dough ingredients for mixing into the fermented sponge include flour, shortening, and potassium carbonate. The addition of a minor amount of water, salt as sodium chloride, ammonium bicarbonate or calcium carbonate in the dough-up stage is optional. The calcium carbonate is added for the nutritive value of the calcium. Ammonium bicarbonate can be added to provide spring. If the levels of ammonium bicarbonate are too high, the structure of the final product becomes very irregular. Additionally, both portions of the ammonium bicarbonate volatilize making it difficult to achieve a desired pH in the final product. A minor amount of water can be used to achieve lubricity, particularly when a portion of the total amount of shortening in the biscuit formulation is used as an ingredient in making the sponge. However, it is preferable to include all of the water as an ingredient of the sponge and all of the shortening as an ingredient of the dough. The dough flour should be weaker than the sponge flour, typically with an ash of about 0.40%, and an acid viscosity reading of about 55° to 60°M. Wheat flour is preferred.

The potassium carbonate which is used in the present invention may be any food-grade potassium carbonate, anhydrous or hydrated. The potassium, carbonate may be added either in dry form or as an aqueous solution. A portion of the water used in making the sponge or dough can be used to form the potassium carbonate solution. A commercially available aqueous potassium carbonate solution, such as a 47% by weight potassium carbonate solution sold by Diamond Shamrock Chemicals Company, Morristown, New Jersey, United States of America, can also be used. The amount of water added to the sponge or dough may correspondingly be reduced. Suitable amounts of the dough ingredients, based upon the total weight of the dough ingredients which are added to the sponge, are from about 65% to about 80% by weight of flour, from about 14% to about 29% by weight shortening, from about 0.5% to about 2.5% by weight potassium carbonate (anhydrous basis), from about 0 to about 0.5% ammonium bicarbonate, from about 0 to about 10% by weight calcium carbonate, from about 0 to about 1.2% by weight salt as sodium chloride, and from about 0 to about 5% by weight water.

The relative amounts of the total amount of sponge ingredients to the dough ingredients should be such that the weight percent of flour used to form the sponge is from about 60% to about 75% by weight of the total amount of flour which is used. Instead of including the optional salt in the dough-up stage, this, salt or a portion of this salt, can be used as topping salt. The ultimate amount of salt which is used is governed by the desired serving limitation on sodium e.g., 35 mg or less sodium per serving. Additionally, the amount of potassium carbonate which is used is governed by the amount of acid produced during the fermentation stage. The above range of 0.5% to 2.5%, however, has been found to be generally suitable for obtaining the desired pH range of about 7.0 to about 8.O. The precise amount needed to obtain a desired final pH can be determined by the same techniques used to determine the amount of sodium bicarbonate addition. The acidity in the sponge which must be compensated for by addition of the potassium carbonate is related in a general way to pH, and the pH readings on the dough can be used for determining the amount of potassium carbonate addition. In the pH test, measurements with temperature compensated electrodes can be taken directly on the sponges immediately prior to addition of the dough ingredients, as is known in the art.

Additionally, pH tests on lumps of dough or sponge sent through the oven ahead of the batch can be used to compensate for changes which may take place in the oven. A total titratable acidity measurement on the sponge is a preferred method because it has been found to be more accurate, even though more time consuming, than the pH test. A fast, accurate method particularly suitable for monitoring production runs is to crush the baked, final product, distribute it in distilled water to form a 10% by weight slurry, and to make adjustments in the potassium carbonate level based upon the pH of the slurry.

Suitable specific sponge and dough formulations for soda crackers or sprayed crackers which can be modified in accordance with the present invention are disclosed in Matz, S., Cereal Technology, the AVI Publishing Company, Inc., Westport, Connecticut, page 138, Table 38 and page 143, Table 39 (1968) and in Johnson et al, Encyclopedia of Food Technology, the AVI Publishing Company, Inc., Westport, Connecticut, page 114, Table B7 (1974). In these formulations, in accordance with the process of the present invention, the sodium bicarbonate is replaced with potassium carbonate and the salt content is reduced so as to achieve a pH in the range of about 7.0 to 8.0 and a sodium content of, for example, less than or equal to 35 mg per 14.2 gram serving.

The dough ingredients are combined with the sponge so as to avoid occurrence of hot spots due to local concentrations of the potassium carbonate. Conventionally, the flour, typically of medium and/or low strength, is first added to the surface of the sponge and then the sodium bicarbonate is added on top, of the flour. This same procedure can be used for the addition of potassium carbonate provided that: a) the potassium carbonate is added as an aqueous solution, or b) the particle size of the potassium carbonate is comparable to the particle size of powdered sodium bicarbonate conventionally used for baking, Suitably, potassium carbonate having a sieve analysis of "100 U.S. mesh 2% by weight retained, 200 U.S. mesh 15%-45% by weight retained, 325 U.S. mesh 50% by weight minimum retained" or finer can be used. To further assure the avoidance of hot spots, the flour should be distributed substantially uniformly over the surface of the sponge and the potassium carbonate, either dry or as an aqueous solution, should be distributed substantially uniformly over the flour. Coarser potassium carbonate, as well as fine potassium carbonate, can be used by applying the potassium carbonate directly and substantially uniformly on the surface of the sponge so that the surface moisture of the sponge hydrates and solubilizes substantially all of the potassium carbonate. In this embodiment, potassium carbonate having particle sizes ranging up to about "through 20 U.S. mesh, on 80 U.S. mesh 98% by weight" can be used, for example, with substantial elimination of hot spots which are due to localized areas of excessive alkalinity.

After adding the potassium carbonate and flour to the sponge, the remaining dry ingredients are added, preferably by sieving, followed by partial mixing, and the addition of the shortening and optional water. The dough ingredients and the sponge are then mixed to obtain a dough of substantial homogeneity. After mixing, the dough is proofed, or allowed to ferment, as is conventional in the cracker art. Typical proofing times range from about 3 hours to about 5 hours, most typically about 4 hours.

6

Generally, the temperature of the sponge before doughing, the temperature of the dough after doughing, and the temperature of the dough at the dough forming machine are substantially the same.

The proofed dough is machined and baked in conventional manner for the preparation of crackers or other sponge goods. Soda crackers, for example, are formed from a continuous sheet of dough which is laminated or lapped before being cut. The dough pieces are formed by a stamping device, such as a reciprocating cutter or rotary cutter, which does not entirely sever the individual crackers from the sheet. The crackers remain in a substantially continuous sheet through the band oven. The cutter also punctures the dough pieces to form docking holes for the prevention of uneven or excess expansion in the oven. After baking, the individual crackers are separated from the substantially continuous sheet. The optional topping salt is, generally applied after stamping and before baking.

Baking is typically performed in a band oven having a perforated or mesh band. Baking temperatures and times are those conventionally used in the art. In the case of soda crackers, baking temperatures in a band oven ranging from about 121° to about 399°C for a period of time of about 1.5 minutes to about 2.5 minutes are suitable.

The baked product is typically dried during the baking step or in a subsequent drying step to a moisture content of about 2% to about 4% by weight, based upon the final weight of the cracker. A topping oil, such as coconut oil, can be applied to the surface of the cracker by spraying after baking as is conventional in the art.

The process of the present invention achieves an oven spring, which is the sum of all the leavening that occurs in the oven, with potassium carbonate which is comparable to the oven spring obtained with sodium bicarbonate. If the addition of the potassium carbonate so as to achieve a desired pH and a desired sodium content does not provide the desired degree of leavening or oven spring, appropriate amounts of chemical leaveners, such as ammonium bicarbonate, can be used with the potassium carbonate.

The present invention is further illustrated, in the following Examples. All percentages, parts, and proportions are by weight unless otherwise indicated.

EXAMPLE I

In this Example, low sodium soda crackers are produced. The ingredients used to form the sponge are:

| SPONGE INGREDIENTS | PARTS BY WEIGHT |
| --- | --- |
| Wheat Flour | 65 |
| Starter Solution | 10 |
| (enzyme, previous batch starter, yeast and water) | |
| Malted Barley Flour | 0.875 |
| Water | 20 |

The sponge is formed by dumping the flour into a trough, adding the malted barley flour, the starter solution, and then the balance of the water. The ingredients are mixed until clear. At the start of the fermentation, the sponge has a temperature of about 23.8° to 26.7°C. The resulting homogeneous mixture is then proofed for about 19 hours.

The dough ingredients and their amounts for addition to the thus obtained sponge are:

Take in Tabulation--

| DOUGH INGREDIENTS | PARTS BY WEIGHT |
| --- | --- |
| Wheat Flour | 35 |
| Shortening | 7 |
| Salt | 0.5 |
| Potassium Carbonate | 1.06 |
| Calcium Carbonate | 0.44 |

The potassium carbonate has a sieve analysis of:

| $K_2CO_3$ | WEIGHT % |
| --- | --- |
| on 40 mesh | 33.2 |
| on 50 mesh | 44.89 |
| on 60 mesh | 13.02 |
| on 80 mesh | 7.61 |
| on 100 mesh | 0.94 |
| through 100 | 0.33 |

At the end of the fermentation period, the temperature of the sponge before doughing is about 32.2° to 33.3°C. The potassium carbonate is distributed substantially uniformly over the surface of the sponge. Then the flour, salt, and calcium carbonate are sieved individually onto the flour. As mixing of these ingredients starts, the shortening is added and mixing is continued until a substantially homogeneous dough is obtained. The temperature of the dough after doughing is about 32.2°C. The mixed dough is then proofed about 4 hours, The proofed dough is laminated, then cut using a rotary cutter. The temperature of the dough at the machine is about 32.2°C. The dough is baked in a band oven having top and bottom burners for about 2 minutes. The baked products are then sprayed with oil. Three, parts by weight of oil are used for the batch.

The baked, final product has a moisture content of about 2.7% by weight and a pH of about 7.2.

The pH of the baked good is measured by measuring the pH of a slurry obtained by crushing a sample and distributing it in distilled water to obtain a slurry which is l0% by weight solids.

The final product has a sodium content of about 31 mg. per 14.2 gram serving. The sodium content of the crackers is measured by atomic absorption.

The biscuits are 51 mm. square by about 5.5 mm. thick and have a stack height of about 229 mm. per 40 crackers. The product has a substantially uniform pleasant light tan color. Dark streaks, which are evidence of potassium carbonate hot spots are not present. The product has a substantially uniform laminar cell structure throughout and a pleasant mouth feel, pleasant crispiness, and no bitter off-flavor.

## EXAMPLE II

Example II is identical to Example I except that the 0.5 parts by weight of salt is applied as topping salt on the laminated dough instead of being incorporated into the dough as in Example I. The final product has a moisture content of about 3.6% by weight, of pH of about 7.1, a uniform texture and has a uniform brown colour. It has a pleasant mouth feel, crispiness and no bitter off-flavor.

## EXAMPLE III

In this example, low sodium soda crackers are produced. The ingredients used to form the sponge are:

| SPONGE INGREDIENTS | PARTS BY WEIGHT |
|---|---|
| Wheat Flour | 60 |
| Starter Solution | 10 |
| (enzyme, previous batch starter, yeast and water) | |
| Malted Barley Flour | 0.875 |
| Water | 20 |

The sponge is formed by dumping the flour into a trough, adding the malted barley flour, the starter solution, and then the balance of the water. The ingredients are mixed until clear. At the start of the fermentation, the sponge has a temperature of about 23.9° to 26.7°C. The resulting homogeneous mixture is then proofed for about 19 hours.

The dough ingredients and their amounts for addition to the thus obtained sponge are:

| DOUGH INGREDIENTS | PARTS BY WEIGHT |
|---|---|
| Wheat Flour | 40 |
| Shortening | 8 |
| Salt | 0.563 |
| Potassium Carbonate (47% solution) | 2.688 |
| Calcium Carbonate | 0.44 |

The potassium carbonate solution, sold by Diamond Shamrock Chemicals Company, Morristown, New Jersey, United States of America, has an analysis, on a weight basis, of 47.3% $K_2CO_3$.

At the end of the fermentation period, the temperature of the sponge before doughing is about 32.2° to 33.3°C. The flour is distributed substantially uniformly over the surface of the sponge and the salt and calcium carbonate are sieved individually onto the flour. The aqueous 47% potassium carbonate is then distributed substantially uniformly over the flour by pouring it in a generally oblong path along the length of the flour-covered sponge. As mixing of these ingredients starts, the shortening is added and mixing is continued until a substantially homogeneous dough is obtained. The temperature of the dough after doughing is about 31.7°C. The mixed dough is then proofed about 4 hours. The proofed dough is laminated, then cut using a rotary cutter. The temperature of the dough at the machine is about 32.2°C. The dough is baked in a band oven having top and bottom burners for about 2 minutes. The baked products are then sprayed with oil. Three parts by weight of oil are used for the batch.

The baked, final product has a moisture content of about 2.4% by weight and a pH of about 7.6. The pH of the baked good is measured by measuring the pH of a slurry obtained by crushing a sample and distributing it in distilled water to obtain a slurry which is 10% by weight solids.

The final product has a sodium content of about 34.7 mg. per 14.2 gram serving. The sodium content of the crackers is measured by atomic absorption.

The biscuits are 51 mm. square by about 5.5 mm. thick and have a stack height of about 229 mm. per 40 crackers. The product has a substantially uniform pleasant light tan color. Dark streaks, which are evidence of potassium carbonate hot spots are not present. The product has a substantially uniform laminar cell structure throughout and a pleasant mouth feel, pleasant crispiness, and no bitter off-flavor.

**0 126 529**

EXAMPLE IV

Example IV is identical to Example III except that the 0.563 parts by weight of salt is applied as topping salt on the laminated dough instead of being incorporated into the dough as in Example III. The final product has a moisture content of about 2.6% by weight, a pH of about 7.6, a uniform texture and has a uniform brown color. It has a pleasant mouth feel, crispiness and no bitter off-flavor. The final product has a sodium content of about 37.2 mg per 14.2 gram serving.

**Claims for the Contracting States: BE CH DE FR GB IT LI LU NL JE**

1. A method for making a sponge good comprising:

a. preparing a sponge by a process comprising mixing sponge ingredients comprising flour, water, and yeast and fermenting the mixture,

b. forming a dough by a process comprising admixing the sponge with dough ingredients comprising flour and an alkaline leavening agent so as to form a sponge-good dough, the alkaline leavening agent added serving to control the pH of the dough by neutralizing acids produced during the fermentation and to leaven the dough, and

c. baking the dough, characterized in that the alkaline leavening agent used is potassium carbonate, the addition of the potassium carbonate is effected so as to avoid localized concentrations of potassium carbonate by:

(i) distributing the potassium carbonate substantially uniformly and directly over the surface of the sponge such that substantially all of the potassium carbonate becomes hydrated and solubilized; or

(ii) distributing the flour substantially uniformly and directly over the surface of the sponge and distributing the potassium carbonate substantially uniformly and directly over the surface of the flour; or

(iii) adding the potassium carbonate in the form of an aqueous solution, and the amount of potassium carbonate added is sufficient to obtain a pH of 7.0 to 8.0 in the baked sponge good.

2. A method as claimed in claim 1, characterized in that shortening is added after the addition of the flour of step (b) and/or after the addition of the potassium carbonate.

3. A method as claimed in claim 1 or 2, characterized in that the sponge-good dough of step (b) is laminated prior to baking.

4. A method as claimed in any one of the preceding claims, characterized in that the ingredients used to prepare the sponge of step (a) comprise from 60% to 70% by weight flour, from 27% to 33% by weight water, 0.1 to 1% by weight yeast, from 0 to 1% by weight diastatic malt, from 0 to 7% by weight shortening, and from 0 to 1% by weight of yeast food, based upon the total weight of the sponge ingredients.

5. A method as claimed in any the preceding claims, characterized in that the dough ingredients used to prepare the sponge-good dough of step (b) comprise flour, potassium carbonate, ammonium bicarbonate, and shortening.

6. A method as claimed in any claim 5, characterized in that the dough ingredients used to form the sponge-good dough of step (b) comprise from 65% to 80% by weight of flour, from 14% to 29% by weight shortening, from 0.5% to 2.5% by weight potassium carbonate, from 0 to 0.5% ammonium bicarbonate, from 0 to 10% calcium carbonate, from 0 to 1.2% by weight sodium chloride, and from 0 to 5% by weight water, based upon the total weight of the dough ingredients.

7. A method as claimed in any one of the preceding claims characterized in that the weight percent of flour used to form the sponge of step (a) is from 60% to 75% by weight of the total amount of flour used in steps (a) and (b).

8. A method as claimed in any one of the preceding claims characterized in that the potassium carbonate is used as a replacement for sodium bicarbonate to an extent such that substantially all of the sodium of the sponge good is contributed by sodium chloride.

9. A method as claimed in claim 8 characterized in that the potassium carbonate has a particle size distribution of 98% by weight being finer than about 80 U.S. mesh.

10. A method as claimed in any one of the preceding claims characterized in that the sponge good has sodium chloride topping salt on its surface.

11. A method as claimed in any one of the preceding claims characterized in that the weight of the potassium carbonate is 80% to 90% by weight of the sodium bicarbonate it replaces.

12. A method as claimed in any one of the preceding claims characterized in that all of the sodium bicarbonate is replaced with potassium carbonate.

13. A sponge good produced by a method as claimed in any of the preceding claims characterized by being laminated and having a sodium content less than or equal to 35 mg per 14.2 gm. serving.

**Claims for the Contracting State: AT**

1. A method for making a sponge good comprising:

a. preparing a sponge by a process comprising mixing sponge ingredients comprising flour, water, and yeast and fermenting the mixture,

b. forming a dough by a process comprising admixing the sponge with dough ingredients comprising flour and an alkaline leavening agent so as to form a sponge-good dough, the alkaline leavening agent

9

added serving to control the pH of the dough by neutralizing acids produced during the fermentation and to leaven the dough, and

c. baking the dough, characterized in that the alkaline leavening agent used is potassium carbonate, the addition of the potassium carbonate is effected so as to avoid localized concentrations of potassium carbonate by:

(i) distributing the potassium carbonate substantially uniformly and directly over the surface of the sponge such that substantially all of the potassium carbonate becomes hydrated and solubilized; or

(ii) distributing the flour substantially uniformly and directly over the surface of the sponge and distributing the potassium carbonate substantially uniformly and directly over the surface of the flour; or

(iii) adding the potassium carbonate in the form of an aqueous solution, and the amount of potassium carbonate added is sufficient to obtain a pH of 7.0 to 8.0 in the baked sponge good.

2. A method as claimed in claim 1, characterized in that shortening is added after the addition of the flour of step (b) and/or after the addition of the potassium carbonate.

3. A method as claimed in claim 1 or 2, characterized in that the sponge-good dough of step (b) is laminated prior to baking.

4. A method as claimed in any one of the preceding claims, characterized in that the ingredients used to prepare the sponge of step (a) comprise from 60% to 70% by weight flour, from 27% to 33% by weight water, 0.1 to 1% by weight yeast, from 0 to 1% by weight diastatic malt, from 0 to 7% by weight shortening, and from 0 to 1% by weight of yeast food, based upon the total weight of the sponge ingredients.

5. A method as claimed in any the preceding claims, characterized in that the dough ingredients used to prepare the sponge-good dough of step (b) comprise flour, potassium carbonate, ammonium bicarbonate, and shortening.

6. A method as claimed in any claim 5, characterized in that the dough ingredients used to form the sponge-good dough of step (b) comprise from 65% to 80% by weight of flour, from 14% to 29% by weight shortening, from 0.5% to 2.5% by weight potassium carbonate, from 0 to 0.5% ammonium bicarbonate, from 0 to 10% calcium carbonate, from 0 to 1.2% by weight sodium chloride, and from 0 to 5% by weight water, based upon the total weight of the dough ingredients.

7. A method as claimed in any one of the preceding claims characterized in that the weight percent of flour used to form the sponge of step (a) is from 60% to 75% by weight of the total amount of flour used in steps (a) and (b).

8. A method as claimed in any one of the preceding claims characterized in that the potassium carbonate is used as a replacement for sodium bicarbonate to an extent such that substantially all of the sodium of the sponge good is contributed by sodium chloride.

9. A method as claimed in claim 8 characterized in that the potassium carbonate has a particle size distribution of 98% by weight being finer than about 80 U.S. mesh.

10. A method as claimed in any one of the preceding claims characterized in that the sponge good has sodium chloride topping salt on its surface.

11. A method as claimed in any one of the preceding claims characterized in that the weight of the potassium carbonate is 80% to 90% by weight of the sodium bicarbonate it replaces.

12. A method as claimed in any one of the preceding claims characterized in that all of the sodium bicarbonate is replaced with potassium carbonate.


**Patentansprüche für die Vertragsstaaten: RE CH DE FR GB IT LI LU NL JE**

1. Verfahren zum Herstellen einer Hefeteigware in folgenden Stufen:

a. Zubereiten eines Hefe-Vorteiges durch einen Vorgang, welcher das Mischen der aus Mehl, Wasser und Hefe bestehenden Hefevorteig-Zutaten und das Vergären der Mischung umfaßt,

b. Bildung eines Befeteiges durch einen Vorgang, welcher das Mischen des Hefe-Vorteiges mit Teig-Zutaten umfaßt, die Mehl und ein alkalisches Treibmittel enthalten, um so einen Hefeteig zu bilden, wobei das zugesetzte alkalische Treibmittel dazu dient, den pH-Wert das Teiges durch Neutralisieren der bei der Gärung entstehenden Säuren zu beeinflussen und den Teig aufgehen zu lassen und

c. Backen des Teiges, dadurch gekennzeichnet, daß das verwendete alkalische Treibmittel Kaliumkarbonat ist, daß der Zusatz von Kaliumkarbonat durchgeführt wird, um lokale Konzentrationen von Kaliumkarbonat dadurch zu vermeiden, daß:

(i) das Kaliumkarbonat im wesentlichen gleichmäßig und direkt auf die Oberfläche des Hefeteiges in der Weise verteilt wird, daß im wesentlichen das ganze Kaliumkarbonat wasserhaltig und löslich gemacht wird; oder

(ii) das Mehl im wesentlichen gleichmäßig und direkt auf die Oberfläche des Hefeteiges verteilt und das Kaliumkarbonat im wesentlichen gleichmäßig und direkt auf die Oberfläche des Mehles verteilt wird; oder

(iii) daß das Kaliumkarbonat in Form einer wässerigen Lösung zugefügt wird, und daß die Menge des zugesetzten Kaliumkarbonats ausreicht, um einen pH-Wert von 7,O bis 8,O in der gebackenen Hefeteigware zu erreichen.

2. Verfahren nach Anspruch 1, dadurch gekennzeichnet, daß nach dem Zusetzen des Mehls der Stufe (b) und/oder nach dem Zusetzen des Kaliumkarbonats Backfett hinzugefügt wird.

3. Verfahren nach Anspruch 1 oder 2, dadurch gekennzeichnet, daß der Hefeteig der Stufe (b) vor dem Backen ausgewalzt wird.

4. Verfahren nach einem der vorhergehenden Ansprüche, dadurch gekennzeichnet, daß die zum Zubereiten des Hefe Vorteiges der Stufe (a) verwendeten Zutaten 60 bis 70 Gewichtsprozent Mehl, 27 bis 33 Gewichtsprozent Wasser, 0,1 bis 1 Gewichtsprozent Hefe, 0 bis 1 Gewichtsprozent diastatisches Malz, 0 bis 7 Gewichtsprozent Backfett und 0 bis 1 Gewichtsprozent Nährhefe enthalten, bezogen auf das Gesamtgewicht der Hefe-Vorteig-Zutaten.

5. Verfahren nach einem der vorhergehenden Ansprüche, dadurch gekennzeichnet, daß die verwendeten Teig-Zutaten zum Zubereiten des Hefeteigs der Stufe (b) aus Mehl, Kaliumkarbonat, Ammoniumbikarbonat und Backfett bestehen.

6. Verfahren nach Anspruch 5, dadurch gekennzeichnet, daß die verwendeten Teig-Zutaten zur Bildung eines Hefeteiges der Stufe (b) aus 65 bis 80 Gewichtsprozent Mehl, 14 bis 29 Gewichtsprozent Backfett, 0,5 bis 2,5 Gewichtsprozent Kaliumkarbonat, 0 bis 0,5 Gewichtsprozent Ammoniumbikarbonat, 0 bis 10 Gewichtsprozent Kalziumkarbonat, 0 bis 1,2 Gewichtsprozent Natriumchlorid und 0 bis 5 Gewichtsprozent Wasser bestehen, bezogen auf das Gesamtgewicht der Teig-Zutaten.

7. Verfahren nach einem der vorhergehenden Ansprüche, dadurch gekennzeichnet, daß der Gewichtsanteil des zur Bildung des Vorteiges der Stufe (a) verwendeten Mehles 60 bis 75 Gewichtsprozent der gesamten Menge des in den Stufen (a) und (b) verwendeten Mehles beträgt.

8. Verfahren nach einem der vorhergehenden Ansprüche, dadurch gekennzeichnet, daß das Kaliumkarbonat als Ersatz für Natriumbikarbonat in einem Ausmaß verwendet wird, daß im wesentlichen das ganze Natrium der Hefeteigware von Natriumchlorid beigesteuert wird.

9. Verfahren nach Anspruch 8, dadurch gekennzeichnet, daß das Kaliumkarbonat eine Aufteilung der Partikelgröße aufweist, bei der 98 Gewichtsprozent der Partikel feiner als etwa 80 U.S. Maschen sind.

10. Verfahren nach einem der vorhergehenden Ansprüche, dadurch gekennzeichnet, daß die Hefeteigware einen Natriumchlorid-Salzüberzug auf seiner Oberfläche aufweist.

11. Verfahren nach einem der vorhergehenden Ansprüche, dadurch gekennzeichnet, daß das Gewicht des Kaliumkarbonats 80 bis 90 Gewichtsprozent des Natriumbikarbonats beträgt, welches es ersetzt.

12. Verfahren nach einem der vorhergehenden Ansprüche, dadurch gekennzeichnet, daß das ganze Natriumbikarbonat durch Kaliumkarbonat ersetzt wird.

13. Hefeteigware, welche nach einem Verfahren hergestellt ist, wie in irgendeinem der vorhergehenden Ansprüche beansprucht ist, dadurch gekennzeichnet, daß sie ausgewalzt wird und einen Natriumgehalt aufweist, der kleiner als oder gleich 35 mg bei einem Gewicht von 14,2 g pro Portion ist.

**Patentansprüche für den Vertragsstaat: AT**

1. Verfahren zum Herstellen einer Hefeteigware in folgenden Stufen:

a. Zubereiten eines Hefe-Vorteiges durch einen Vorgang, welcher das Mischen der aus Mehl, Wasser und Hefe bestehenden Hefevorteig-Zutaten und das Vergären der Mischung umfaßt,

b. Bildung eines Hefeteiges durch einen Vorgang, welcher das Mischen des Hefe-Vorteiges mit Teig-Zutaten umfaßt, die Mehl und ein alkalisches Treibmittel enthalten, um so einen Hefeteig zu bilden, wobei das zugesetzte alkalische Treibmittel dazu dient, den pH-Wert das Teiges durch Neutralisieren der bei der Gärung entstehenden Säuren zu beeinflussen und den Teig aufgehen zu lassen und

c. Backen des Teiges, dadurch gekennzeichnet, daß das verwendete alkalische Treibmittel Kaliumkarbonat ist, daß der Zusatz von Kaliumkarbonat durchgeführt wird, um lokale Konzentrationen von Kaliumkarbonat dadurch zu vermeiden, daß:

(i) das Kaliumkarbonat im wesentlichen gleichmäßig und direkt auf die Oberfläche des Hefeteiges in der Weise verteilt wird, daß im wesentlichen das ganze Kaliumkarbonat wasserhaltig und löslich gemacht wird; oder

(ii) das Mehl im wesentlichen gleichmäßig und direkt auf die Oberfläche des Hefeteiges verteilt und das Kaliumkarbonat im wesentlichen gleichmäßig und direkt auf die Oberfläche des Mehles verteilt wird; oder

(iii) daß das Kaliumkarbonat in Form einer wässerigen Lösung zugefügt wird, und daß die Menge des zugesetzten Kaliumkarbonats ausreicht, um einen pH-Wert von 7,0 bis 8,0 in der gebackenen Hefeteigware zu erreichen.

2. Verfahren nach Anspruch 1, dadurch gekennzeichnet, daß nach dem Zusetzen des Mehls der Stufe (b) und/oder nach dem Zusetzen des Kaliumkarbonats Backfett hinzugefügt wird.

3. Verfahren nach Anspruch 1 oder 2, dadurch gekennzeichnet, daß der Hefeteig der Stufe (b) vor dem Backen ausgewalzt wird.

4. Verfahren nach einem der vorhergehenden Ansprüche, dadurch gekennzeichnet, daß die zum Zubereiten des Hefe-Vorteiges der Stufe (a) verwendeten Zutaten 60 bis 70 Gewichtsprozent Mehl, 27 bis 33 Gewichtsprozent Wasser, 0,1 bis 1 Gewichtsprozent Hefe, 0 bis 1 Gewichtsprozent diastatisches Malz, 0 bis 7 Gewichtsprozent Backfett und 0 bis 1 Gewichtsprozent Nährhefe enthalten, bezogen auf das Gesamtgewicht der Hefe-Vorteig-Zutaten.

5. Verfahren nach einem der vorhergehenden Ansprüche, dadurch gekennzeichnet, daß die verwendeten Teig-Zutaten zum Zubereiten des Hefeteigs der Stufe (b) aus Mehl, Kaliumkarbonat, Ammoniumbikarbonat und Backfett bestehen.

6. Verfahren nach Anspruch 5, dadurch gekennzeichnet, daß die verwendeten Teig-Zutaten zur Bildung eines Hefeteiges der Stufe (b) aus 65 bis 80 Gewichtsprozent Mehl, 14 bis 29 Gewichtsprozent Backfett, 0,5 bis 2,5 Gewichtsprozent Kaliumkarbonat, 0 bis 0,5 Gewichtsprozent Ammoniumbikarbonat, 0 bis 10 Gewichtsprozent Kalziumkarbonat, 0 bis 1,2 Gewichtsprozent Natriumchlorid und 0 bis 5 Gewichtsprozent Wasser bestehen, bezogen auf das Gesamtgewicht der Teig-Zutaten.

7. Verfahren nach einem der vorhergehenden Ansprüche, dadurch gekennzeichnet, daß der Gewichtsanteil des zur Bildung des Vorteiges der Stufe (a) verwendeten Mehles 60 bis 75 Gewichtsprozent der gesamten Menge des in den Stufen (a) und (b) verwendeten Mehles beträgt.

8. Verfahren nach einem der vorhergehenden Ansprüche, dadurch gekennzeichnet, daß das Kaliumkarbonat als Ersatz für Natriumbikarbonat in einem Ausmaß verwendet wird, daß im wesentlichen das ganze Natrium der Hefeteigware von Natriumchlorid beigesteuert wird.

9. Verfahren nach Anspruch 8, dadurch gekennzeichnet, daß das Kaliumkarbonat eine Aufteilung der Partikelgröße aufweist, bei der 98 Gewichtsprozent der Partikel feiner als etwa 80 U.S. Maschen sind.

10. Verfahren nach einem der vorhergehenden Ansprüche, dadurch gekennzeichnet, daß die Hefeteigware einen Natriumchlorid-Salzüberzug auf seiner Oberfläche aufweist.

11. Verfahren nach einem der vorhergehenden Ansprüche, dadurch gekennzeichnet, daß das Gewicht des Kaliumkarbonats 80 bis 90 Gewichtsprozent des Natriumbikarbonats beträgt, welches es ersetzt.

12. Verfahren nach einem der vorhergehenden Ansprüche, dadurch gekennzeichnet, daß das ganze Natriumbikarbonat durch Kaliumkarbonat ersetzt wird.

**Revendications pour les Etats contractants: BE CH DE FR GB IT LI LU NL JE**

1. Procédé pour la fabrication d'un produit à pâte légère comprenant:

a) la préparation d'une pâte légère selon un procédé comprenant le mélange des ingrédients de pâte légère constitués de farine, d'eau, et de levure, et la fermentation du mélange,

b) la réalisation d'une pâte par un procédé comprenant le mélange de la pâte légère avec des ingrédients comprenant de la farine et un agent de levage alcalin de façon à former la pâte proprement dite, l'agent de levage alcalin ajouté servant à contrôler le pH de la pâte proprement dite par neutralisation des acides produits durant la fermentation et à lever la pâte, et

c) la cuisson de la pâte, caractérisé en ce que l'agent de levage alcalin utilisé est du carbonate de potassium, l'addition de carbonate de potassium est effectuée de façon à éviter des concentrations localisées de carbonate de potassium par:

i) la répartition du carbonate de potassium de façon sensiblement uniforme et directement sur la surface de la pâte légère telle que sensiblement tout le carbonate de potassium soit hydraté et solubilisé; ou

ii) la répartition de la farine de façon sensiblement uniforme et directement sur la surface de la pâte légère et la répartition du carbonate de potassium de façon sensiblement uniforme et directement sur la surface de la farine; ou

iii) l'addition du carbonate de potassium sous forme de solution aqueuse, et la quantité de carbonate de potassium ajoutée est suffisante pour obtenir un pH de 7 à 8 dans le produit à pâte légère cuit.

2. Procédé selon la revendication 1, caractérisé en ce que de la matière grasse est ajoutée après l'addition de la farine de l'étape (b) et/ou après l'addition du carbonate de potassium.

3. Procédé selon l'une des revendications 1 ou 2, caractérisé en ce que la pâte proprement dite de l'étape (b) est feuilletée avant la cuisson.

4. Procédé selon l'une quelconque des revendications précédentes, caractérisé en ce que les ingrédients utilisés pour préparer la pâte légère de l'étape (a) comprennent de 60% à 70% en poids de farine, de 27% à 33% en poids d'eau, de 0,1 à 1% en poids de levure, de 0 à 1% en poids de malt diastatique, de 0 à 7% en poids de matière grasse, et de 0 à l% en poids de levure alimentaire, basés sur le poids total des ingrédients de la pâte légère.

5. Procédé selon l'une quelconque des revendications précédentes, caractérisé en ce que les ingrédients de la pâte proprement dite utilisés pour préparer la pâte de l'étape (b) comprennent de la farine, du carbonate de potassium, du bicarbonate d'ammonium, et de la matière grasse.

6. Procédé selon la revendication 5, caractérisé en ce que les ingrédients de la pâte proprement dite utilisés pour réaliser la pâte de l'étape (b) comprennent de 65% à 80% en poids de farine, de 14% à 29% en poids de matière grasse, de 0,5% à 2,5% en poids de carbonate de potassium, de 0 à 0,5% de bicarbonate d'ammonium, de 0 à 10% de carbonate de calcium, de 0 à 1,2% en poids de chlorure de sodium, et de 0 à 5% en poids d'eau, basés sur le poids total des ingrédients de la pâte.

7. Procédé selon l'une quelconque des revendications précédentes, caractérisé en ce que le pourcentage pondéral de farine utilisé pour réaliser la pâte légère de l'étape (a) est de 60% à 75% en poids de la quantité totale de farine utilisée dans les étapes (a) et (b).

8. Procédé selon l'une quelconque des revendications précédentes, caractérisé en ce que le carbonate de potassium est utilisé en remplacement du bicarbonate de sodium de façon telle que sensiblement tout le sodium du produit à pâte légère est fourni par le chlorure de sodium.

9. Procédé selon la revendication 8, caractérisé en ce que le carbonate de potassium présente une granulométrie telle que 98% en poids des particules sont plus fines qu'environ 80 US mesh.

12

10. Procédé selon l'une quelconque des revendications précédentes, caractérisé en ce que le produit à pâte légère présente une garniture de chlorure de sodium sur sa surface.

11. Procédé selon l'une quelconque des revendications précédentes, caractérisé en ce que le poids du carbonate de potassium est de 80% à 90% en poids du bicarbonate de sodium qu'il remplace.

12. Procédé selon l'une quelconque des revendications précédentes, caractérisé en ce que la totalité du bicarbonate de sodium est remplacée par du carbonate de potassium.

13. Produit à pâte légère obtenu selon le procédé défini par l'une quelconque des revendications précédentes, caractérisé en ce qu'il est feuilleté et présente une teneur en sodium inférieure ou égale à 35 mg par portion de 14,2 g.

**Revendications pour l'Etat contractant: AT**

1. Procédé pour la fabrication d'un produit à pâte légère comprenant:

a) la préparation d'une pâte légère selon un procédé comprenant le mélange des ingrédients de pâte légère constitués de farine, d'eau, et de levure, et la fermentation du mélange,

b) la réalisation d'une pâte par un procédé comprenant le mélange de la pâte légère avec des ingrédients comprenant de la farine et un agent de levage alcalin de façon à former la pâte proprement dite, l'agent de levage alcalin ajouté servant à contrôler le pH de la pâte proprement dite par neutralisation des acides produits durant la fermentation et à lever la pâte, et

c) la cuisson de la pâte, caractérisé en ce que l'agent de levage alcalin utilisé est du carbonate de potassium, l'addition de carbonate de potassium est effectuée de façon à éviter des concentrations localisées de carbonate de potassium par:

i) la répartition du carbonate de potassium de façon sensiblement uniforme et directement sur la surface de la pâte légère telle que sensiblement tout le carbonate de potassium soit hydraté et solubilisé; ou

ii) la répartition de la farine de façon sensiblement uniforme et directement sur la surface de la pâte légère et la répartition du carbonate de potassium de façon sensiblement uniforme et directement sur la surface de la farine; ou

iii) l'addition du carbonate de potassium sous forme de solution aqueuse, et la quantité de carbonate de potassium ajoutée est suffisante pour obtenir un pH de 7 à 8 dans le produit à pâte légère cuit.

2. Procédé selon la revendication 1, caractérisé en ce que de la matière grasse est ajoutée après l'addition de la farine de l'étape (b) et/ou après l'addition du carbonate de potassium.

3. Procédé selon l'une des revendications 1 ou 2, caractérisé en ce que la pâte proprement dite de l'étape (b) est feuilletée avant la cuisson.

4. Procédé selon l'une quelconque des revendications précédentes, caractérisé en ce que les ingrédients utilisés pour préparer la pâte légère de l'étape (a) comprennent de 60% à 70% en poids de farine, de 27% à 33% en poids d'eau, de 0,1 à 1% en poids de levure, de 0 à 1% en poids de malt diastatique, de 0 à 7% en poids de matière grasse, et de 0 à 1% en poids de levure alimentaire, basés sur le poids total des ingrédients de la pâte légère.

5. Procédé selon l'une quelconque des revendications précédentes, caractérisé en ce que les ingrédients de la pâte proprement dite utilisés pour préparer la pâte de l'étape (b) comprennent de la farine, du carbonate de potassium, du bicarbonate d'ammonium, et de la matière grasse.

6. Procédé selon la revendication 5, caractérisé en ce que les ingrédients de la pâte proprement dite utilisés pour réaliser la pâte de l'étape (b) comprennent de 65% à 80% en poids de farine, de 14% à 29% en poids de matière grasse, de 0,5% à 2,5% en poids de carbonate de potassium, de 0 à 0,5% de bicarbonate d'ammonium, de 0 à 10% de carbonate de calcium, de 0 à 1,2% en poids de chlorure de sodium, et de 0 à 5% en poids d'eau, basés sur le poids total des ingrédients de la pâte.

7. Procédé selon l'une quelconque des revendications précédentes, caractérisé en ce que le pourcentage pondéral de farine utilisé pour réaliser la pâte légère de l'étape (a) est de 60% à 75% en poids de la quantité totale de farine utilisée dans les étapes (a) et (b).

8. procédé selon l'une quelconque des revendications précédentes, caractérisé en ce que le carbonate de potassium est utilisé en remplacement du bicarbonate de sodium de façon telle que sensiblement tout le sodium du produit à pâte légère est fourni par le chlorure de sodium.

9. Procédé selon la revendication 8, caractérisé en ce que le carbonate de potassium présente une granulométrie telle que 98% en poids des particules sont plus fines qu'environ 80 US mesh.

10. Procédé selon l'une quelconque des revendications précédentes, caractérisé en ce que le produit à pâte légère présente une garniture de chlorure de sodium sur sa surface.

11. Procédé selon l'une quelconque des revendications précédentes, caractérisé en ce que le poids du carbonate de potassium est de 80% à 90% en poids du bicarbonate de sodium qu'il remplace.

12. Procédé selon l'une quelconque des revendications précédentes, caractérisé en ce que la totalité du bicarbonate de sodium est remplacée par du carbonate de potassium.